# EUROPEAN PATENT APPLICATION

(11) **EP 0 629 339 A1**
(43) Date of publication of application: **21.12.1994**
(21) Application number: 94303874.5
(22) Date of filing: 27.05.1994
(51) Int. Cl.: A01D 34/70

(54) **Improvements in grass-mowing machines**

(30) Priority: 28.05.1993 GB 9311024
(71) Applicant: ELECTROLUX OUTDOOR PRODUCTS LIMITED, Newton Aycliffe, Co Durham DL5 6UP (GB)
(72) Inventor: Bowden, Michael, Newton Aycliffe, Co Durham DL5 4RS (GB)
(74) Representative: Arthur, Bryan Edward

(57) **Abstract**

In a hover mower the air impeller (15) and the cutting blades (9) are driven by separate motors (11,16). Power to the cutting blade motor may be supplied through a switch controlling the air impeller motor, and a separate switch in series with the cutting blade motor enables the cutters to be stopped while the air cushion is maintained. The impeller may supply cooling air to both motors. The speed of the air impeller motor may be separately adjustable.

## Description

This invention relates to grass-mowing machines, and in particular to hover mowers, that is to say grass-cutting machines of the kind supported, in use, on a cushion of air generated by an air impeller and having a cutting member including at least one cutter blade mounted for rotation about a substantially vertical axis and driven by a prime mover which may be an electric motor or an internal combustion engine. The air flow produced by the air impeller, or a part of that air flow, may also be utilised to transfer grass cuttings produced by mowing into a collecting box.

In electrically-powered hover mowers the cutting member and the air impeller are conventionally mounted directly on the motor shaft and cutting height adjustment is achieved by the insertion of one or more spacing washers above the cutting member.

When power to the motor is switched off the cutting member may, owing to inertia, continue to rotate for some time with a risk of injuring the operator. To minimise this risk the mower may incorporate a brake, which may be mechanical, or it may be electromagnetic or electrical, and come into action automatically when the power to or from the motor is interrupted.

The conventional arrangement in which the cutting member and the air impeller are mounted directly on the motor shaft imposes certain design limitations, and the present invention, which is defined in the appended claims, is aimed at creating an improved form of mower. This is achieved by using separate motors for driving the cutting member and the air impeller. preferably, the motors are operable independently of each other and may be separately controlled. However, in order to avoid damaging the mower components and possible injury to a user, it is desirable that the cutting member should not be operative in the absence of a supporting air cushion, that is, with the mower in an "in-use" mode.

A mower in accordance with the invention has a number of advantages over the conventional arrangement.

In conventional hover mowers the speed at which the prime mover runs is limited by the maximum practical cutting speed, and such a speed is often too low for the impeller to operate effectively. Further, when cutting long or dense grass, the increased load causes the speed to be reduced, resulting in loss of airflow, lowering the hovering height and, if collection of cut grass is also a function of the mower, reducing the effectiveness of collection. The reduction of speed due to increased load has a further undesirable effect, in that the motor generates additional heat, while at the same time the reduced impeller speed causes the flow of cooling air to be reduced with consequent over heating of the motor.

In a mower according to the present invention the cutting member may be driven indirectly, for example, through a belt or gearing, thereby enabling a smaller high-speed prime mover to be employed to drive the cutting member at a suitable increased or reduced speed. The air impeller, which is preferably driven at a much higher speed, may be directly or indirectly coupled to its own prime mover shaft. The air impeller preferably provides cooling air for both motors but, if desired, separate air impellers may be used.

Preferably, a switch is connected in series with the cutter motor to enable the cutters to be stopped while the air cushion is maintained, thus enabling the mower to be manipulated over obstacles such as kerbs and manhole covers without risk of damage to the cutter blade.

The air impeller motor is, preferably, associated with a speed control. This enables the air flow to be adjusted to reduce or increase hovering height and avoid excessive scattering of clippings when cutting short grass, or to reduce overload and improve efficiency when dealing with long grass. Such speed control is preferably limited in range, so that an air cushion will always be maintained while the cutter blades are rotating.

The cutter blades in a mower according to the invention are more readily brought to rest, since they are not coupled to the inertia of the impeller and do not have to dissipate its additional kinetic energy. Braking may be electrical, by short-circuiting the motor through a resistor. The air impeller motor will not normally require any braking.

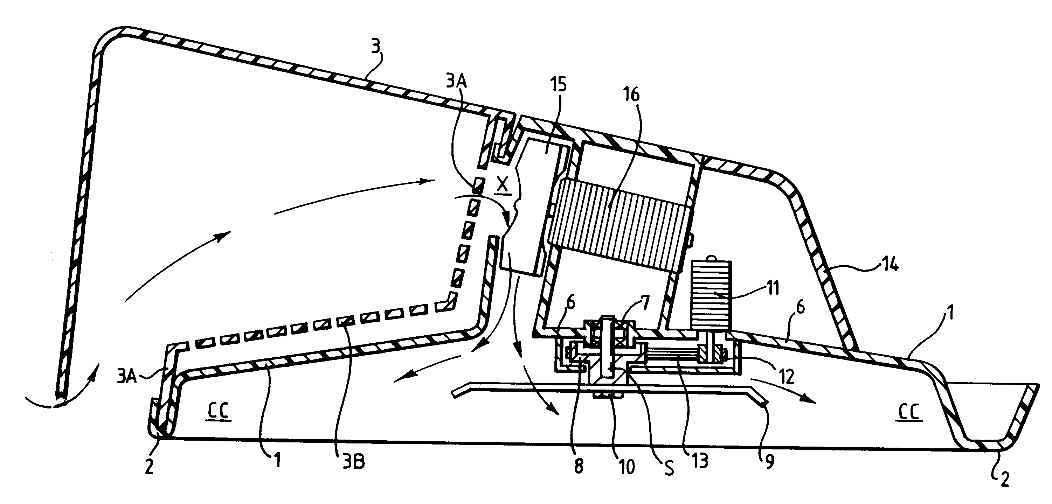

The invention will be further described with reference to the single figure of the accompanying drawing, which shows a schematic sectional elevation through the body of the mower, the handle and electrical wiring being omitted.

Referring now to this figure, the mower comprises a chassis or deck 1 of generally dome shape, with its edges turned up all round to form a smooth rounded lip 2 and enclosing a cutting chamber CC. Air blown into this casing escapes round the edges past this lip and its pressure supports the mower above ground level. A grassbox 3 is supported on the rear of the casing 1, and corresponding apertures at X in the grassbox 3 and the casing 1 allow air to be drawn from the grassbox via a screen 3A (which retains grass in the grass box) into the casing. The grassbox is held in position partly by its lower edge 3A being engaged in the lip 2, which is narrowed at the rear edge, and partly by a similar lip-and-edge engagement at position 4 above the apertures at X. If desired, lower face 3B of the grassbox 3 may be perforated so that air can pass through the lower face thereby assisting compaction of the grass cuttings.

An inner member 6 of the dome-shaped casing 1 carries journal bearings 7 in which revolve a shaft 5 carrying a belt pulley 8 and on the end of which a cutter blade 9 is secured by a retaining nut 10. An electric motor 11, also mounted on the inner member carries a further pulley 12 which drives the cutter shaft by a belt 13 engaging its pulley 11. This belt/gear arrangement is protected from ingress of grass and debris by a snap-on cover 14 which can be removed when necessary for access to the belt gear.

The upper part of the casing 1 supports an air impeller 15 and its motor 16. The impeller 15 consists of a fan mounted opposite the apertures at X, in which position it draws air in through the grassbox 3 and forces it into the casing 1, where it establishes a supporting cushion for the mower and ultimately escapes past the lip 2. At the rear of the mower air is drawn up into the grassbox 3, carrying the grass cuttings with it.

The electrical arrangements which are not shown in the drawing and which can be incorporated using known techniques, comprise a master switch controlling the supply to both motors, and operated by a lever on the handle, a separate switch cutting off power to the cutter motor 11 but allowing the air cushion to be maintained, a speed control for the air impeller motor 16 which allows the hovering height to be varied within limits, and a relay-operated shorting switch for the cutter motor 11 arranged to bring it rapidly to rest when its power is cut off.

## Claims

1. A hover mower of the kind described in which an air impeller and a cutting member are each independently driven by a separate prime mover.

2. A mower according to claim 1 wherein at least one prime mover is an electric motor.

3. A hover mower according to claim 1 in which each prime mover is an electric motor and electrical power to the cutting member motor is supplied through a switch controlling the air impeller motor, so that the cutting member is not driven in the absence of a cushion of supporting air.

4. A hover mower according to claim 2 or claim 3 in which the cutting member is indirectly driven from its motor.

5. A hover mower according to any preceding claim including a brake for stopping the rotation of the cutting member.

6. A hover mower according to any one of claims 2 to 5 in which a switch in series with the cutting member motor enables the cutting member to be stopped while the air cushion is maintained.

7. A hover mower according to any preceding claim in which the air impeller supplies cooling air both to the air impeller motor and the cutting member motor.

8. An electrically-powered hover mower according to any one of claims 2 to 7 in which the speed of at least the air impeller motor is separately adjustable over a limited speed range.

9. A hover mower according to any preceding claim in which the air flow produced by the air impeller serves at least in part to transfer grass cuttings to a collecting box.

10. A rotary mower comprising a chassis in the form of a dome having a downwardly depending peripheral flange defining a cutting chamber within the chassis and opening, in use, towards ground datum,
a cutting member including at least one cutter blade mounted for rotation within the cutting chamber about a plane which is substantially parallel to ground datum,
a first prime mower and a first drive line drivingly connecting the first prime mover and the cutting member,
an air impeller for delivering the flow of pressure air at least into the cutting chamber,
a second prime mover and a second drive line drivingly connecting the second prime mover and the air impeller.

11. A rotary mower comprising a chassis in the form of a dome having a downwardly depending peripheral flange defining a cutting chamber within the chassis and opening, in use, towards ground datum,
an air impeller for delivering a flow of pressure air at least into the cutting chamber,
a power source, first and second drive lines drivingly connecting the cutting member and the impeller respectively, and means for regulating the output of each drive line.
